# FASCICULE DE BREVET EUROPEEN

(11) **EP 1 496 035 B1**
(45) Date de publication et mention de la délivrance du brevet: **12.03.2014**
(21) Numéro de dépôt: 04291731.0
(22) Date de dépôt: 08.07.2004
(51) Int. Cl.: C06B 47/10, C01B 3/06, H01M 8/00

(54) **Compositions solides génératrices d'hydrogène par combustion comprenant un borohydrure de magnésium et un oxydant de la famille des dinitramines**
Magnesiumborohydrid und eine Nitramin-Verbindung als Oxidationsmittel enthaltende feste Zusammensetzungen zur Erzeugung von Wasserstoff mittels Verbrennung
Magnesium borohydride and an oxidizer of the nitramines family containing solid compositions for generating hydrogen by combustion

(30) Priorité: 10.07.2003 FR 0308479
(43) Date de publication de la demande: 12.01.2005
(73) Titulaire: HERAKLES, 33185 Le Haillan (FR)
(72) Inventeur: Desgardin, Nancy, 91220 Bretigny Sur Orge (FR); Perut, Christian, 77310 St Fargeau Ponthierry (FR); Renouard, Joel, 77630 St Martin en Biere (FR)
(74) Mandataire: Le Roux, Martine

(56) Documents cités:
- EP-A- 1 249 427
- EP-A2- 1 405 823
- EP-A2- 1 405 824
- US-A- 4 379 007
- CHEMICAL ABSTRACTS, vol. 133, no. 20, 12 novembre 2000 (2000-11-12), Columbus, Ohio, US; abstract no.: 283737w, H. BONIUK ET AL.: "Synthesis and properties of salts of dinitroamide (DNA) with various amines" XP001081946 & Int. Annu. Conf. ICT 2000, 31st(Energetic Materials), 39/1-39/9

## Description

La présente invention se situe dans le domaine des générateurs d'hydrogène, gaz largement utilisé comme combustible ou réducteur dans de nombreux procédés industriels ou dispositifs.

Elle a plus précisément pour objet de nouvelles compositions solides décomposables en générant de l'hydrogène selon une réaction auto-entretenue de combustion, et l'utilisation de ces compositions pour alimenter en hydrogène les piles à combustibles à membrane échangeuse de protons.

De nombreuses compositions solides génératrices d'hydrogène par combustion sont connues, notamment pour produire de l'hydrogène destiné à servir de combustible dans les lasers chimiques.

Le brevet US 3 948 699 décrit des compositions solides génératrices d'hydrogène par combustion, constituées d'un mélange de borohydrure alcalin, par exemple le borohydrure de sodium NaBH₄, avec un oxyde métallique, par exemple l'oxyde de fer Fe₂O₃.

Les rendements massiques en hydrogène produit avec ces compositions sont toutefois faibles, inférieurs à 5%, exprimés en poids d'hydrogène obtenu par rapport au poids total de la composition.

Le brevet US 4 064 225 décrit d'autres compositions solides génératrices d'hydrogène par combustion, constituées d'un mélange de borohydrure alcalin, par exemple le borohydrure de sodium, avec le sulfate d'ammonium (NH₄)₂SO₄ ou le bichromate d'ammonium (NH₄)₂Cr₂O₇.

Les rendements massiques pour ces compositions sont légèrement plus élevés, de l'ordre de 6%.

De tels rendements en hydrogène, inférieurs ou voisins de 5%, s'avèrent en pratique insuffisants, notamment lorsqu'une miniaturisation des systèmes est recherchée, par exemple lorsqu'on souhaite remplacer les batteries des systèmes électroniques portatifs, tels que téléphones et ordinateurs, par des piles à combustible à hydrogène miniatures.

Le brevet US 4,673,528 décrit une composition solide génératrice d'hydrogène pouvant être sous la forme de pastilles utilisables comme combustibles dans des lasers chimiques. Les compositions génératrices d'hydrogène décrites dans ce brevet sont stables thermiquement et comportent en pourcentage massique entre 5 et 15% d'un oxydant choisi parmi le nitrate de lithium LiNO₃ et le nitrate de potassium KNO₃, de 80 à 90% de borohydrure de magnésium diammoniaque Mg(BH₄)₂, 2NH₃ et éventuellement de 2 à 15% d'un liant tel que le polytétrafluoroéthylène. Les rendements en hydrogène obtenus avec ce type de composition peuvent atteindre 12,5%.

L'homme du métier qui souhaite remplacer les batteries des systèmes électroniques portatifs, tels que téléphones et ordinateurs, par des piles à combustible à hydrogène miniatures, a le souci permanent de rechercher de nouvelles compositions solides génératrices d'hydrogène par combustion parfaitement stables et procurant de meilleurs rendements massiques en hydrogène.

Un but de l'invention est notamment d'obtenir des compositions génératrices d'hydrogène ayant un bon rendement massique d'hydrogène par gramme de composition solide et dont la combustion est effectuée à une température suffisamment élevée pour que la réaction soit auto-entretenue et pour éviter que la composition solide ne s'éteigne et ainsi qu'elle ne soit pas entièrement consommée. Les proportions pondérales relatives entre l'oxydant et le réducteur devront être établies de manière à atteindre ce but.

Une composition solide décomposable en générant de l'hydrogrène comprenant un borohydrure alcalin et l'ammonium dinitramide est connue du document EP 1 249 427.

La présente invention répond à ces différents objectifs.

Elle a plus précisément pour objet de nouvelles compositions solides décomposables en générant de l'hydrogène selon une réaction auto-entretenue de combustion après initiation de cette réaction par une source de chaleur appropriée, ladite composition ne contenant pas de carbone, comprenant un borohydrure de magnésium Mg(BH₄)₂ ou l'un de ses dérivés et un composé oxydant de la famille des dinitramides, la somme des pourcentages massiques en borohydrure de magnésium ou en un de ses dérivés et en composé oxydant de la famille des dinitramides étant supérieure ou égale à 75% par rapport à la masse totale de la composition.

On a constaté, de façon inattendue, que de telles compositions permettaient de procurer un rendement massique en hydrogène pouvant atteindre 12% selon la nature et les proportions relatives des constituants, ce qui constitue un progrès technique et économique particulièrement intéressant, pour les raisons précitées.

Selon l'invention, ces compositions présentent l'avantage de ne pas contenir de carbone ce qui permet d'éviter lors de leur combustion la formation de gaz poisons comme le monoxyde de carbone (CO). De plus, selon l'invention, les borohydrures de magnésium présentent l'avantage de disposer d'un fort taux d'hydrogène.

De façon particulièrement préférée, les compositions selon l'invention sont essentiellement constituées d'un borohydrure de magnésium ou de l'un de ses dérivés et d'un oxydant de la famille des dinitramides, (cette famille est plus usuellement, de façon incorrecte, dénommée en langue française la famille des « dinitramines »), c'est à dire que ces constituants sont pondéralement majoritaires. On a donc la somme des pourcentages massiques en borohydrure de magnésium ou en l'un de ses dérivés et en oxydant supérieure ou égale à 75%, et mieux encore supérieure à 90%, et même supérieure à 95%, par rapport au poids total de la composition.

De façon générale et préférée, selon l'invention, le rapport pourcentage massique en borohydrure de magnésium ou l'un de ses dérivés/pourcentage massique en oxydant de la famille des dinitramides est compris entre 1 et 10 et préférentiellement entre 1 et 4. Une composition comprenant un borohydrure de magnésium ou l'un de ses dérivés et un composé de la famille des dinitramides dans des proportions pondérales d'environ 70/30 ou 60/40 sera donc particulièrement préférée.

Les compositions uniquement constituées de borohydrure de magnésium ou de l'un de ses dérivés et de l'oxydant de la famille des dinitramides, c'est-à-dire dont la somme des pourcentages massiques des deux constituants atteint 100%, sont particulièrement préférées. Par « uniquement constituées » il faut comprendre que les compositions peuvent néanmoins inclure les impuretés présentes dans le borohydrure de magnésium et dans l'oxydant de la famille des dinitramides ou bien encore des additifs tels que des stabilisants, que ces produits soient commerciaux ou synthétisés selon des méthodes usuelles.

Lorsque les compositions ne sont pas uniquement constituées des deux constituants principaux, elles peuvent par exemple également comprendre à des faibles taux d'autres borohydrures métalliques, alcalin ou alcalino-terreux, et/ou un hydrure métallique et/ou d'autres sels minéraux oxydants comme le nitrate de strontium, le sulfate d'ammonium, le perchlorate d'ammonium, le perchlorate de sodium ou de potassium et les oxydes de fer.

Selon un mode de réalisation préféré de l'invention, l'oxydant est choisi parmi l'ammonium dinitramide (NH₄N(NO₂)₂) et le potassium dinitramide (KN(NO₂)₂).

Selon un mode de réalisation préféré de l'invention, pour supprimer la sensibilité de la composition à l'électricité statique, une quantité déterminée de silice SiO₂ est introduite dans le composé de la famille des dinitramides.

Selon une particularité de ce mode de réalisation, le SiO₂ est présent à hauteur de 4% dans le composé de la famille des dinitramides.

Selon une autre variante préférée, les compositions solides selon l'invention se présentent sous forme d'un matériau compact, ayant une forme propre, par exemple et de façon préférée sous forme de pastilles ou de grains. Les grains peuvent avoir une forme quelconque, de préférence sphérique, ovoïde ou cylindrique.

Les pastilles peuvent également avoir une épaisseur et une géométrie périphérique quelconque, par exemple circulaire, elliptique, carrée ou rectangulaire.

L'épaisseur des pastilles peut ne pas être constante.

Les compositions solides selon l'invention, décrites ci-dessus, peuvent être obtenues par analogie avec les méthodes décrites utilisées pour obtenir les compositions solides précitées de l'état de la technique, par exemple par simple mélange des constituants, broyage puis homogénéisation mécanique. On peut aussi broyer les constituants avant le mélange, ou bien encore utiliser des constituants se présentant déjà sous forme pulvérulente.

Les compositions peuvent également être obtenues par granulation.

Lorsque, de façon préférée, on veut obtenir une composition solide se présentant sous forme d'un matériau compact, le mélange homogène, granulaire ou pulvérulent, des divers constituants peut par exemple être aggloméré par compactage dans un pot de presse ayant la forme et les dimensions recherchées pour le matériau compact.

On peut également obtenir un matériau compact par mise en solution et/ou suspension des constituants dans un milieu liquide. Après homogénéisation et mise dans un moule aux dimensions appropriées et recherchées pour le matériau compact, on élimine le liquide, par exemple par évaporation, ce qui permet d'obtenir un matériau compact.

La présente invention a également pour objet un procédé de génération d'hydrogène par combustion auto-entretenue d'une composition solide selon l'invention décrite ci-dessus comprenant un borohydrure de magnésium ou l'un de ses dérivés et un oxydant de la famille des dinitramides. Les différentes compositions possibles ainsi que les pourcentages massiques entre ses constituants sont précisées ci-dessus.

Selon ce procédé, on réalise tout d'abord une composition solide homogène, pulvérulente ou granulaire, comprenant un borohydrure de magnésium Mg(BH₄)₂ ou l'un de ses dérivés comme par exemple Mg(BH₄)₂,NH₃ et un oxydant de la famille des dinitramides comme par exemple l'ammonium dinitramide ou le potassium dinitramide. Les pourcentages massiques des différents constituants sont précisées ci-dessus.

On agglomère ensuite cette composition selon des moyens appropriés, par exemple ceux précités, de façon à former un matériau compact, puis on place le matériau compact dans une chambre à combustion que l'on purge sous gaz inerte ou hydrogène.

Lorsque le volume mort est faible (volume restant dans la chambre après mise en place du matériau compact), une telle purge peut, en pratique, être inutile.

On initie alors la combustion du matériau compact à l'aide d'une source de chaleur appropriée, ce qui provoque la combustion auto-entretenue du matériau avec génération d'hydrogène jusqu'à la fin de la combustion.

Les sources de chaleur appropriées permettant l'initiation de la combustion par effet « Joule » sont bien connues de l'homme du métier, notamment les initiateurs électriques. L'utilisation d'un filament d'allumage nickel-chrome placé en contact ou enrobé avec la composition à initier, auquel on impose une tension et une intensité de courant suffisantes (donc une puissance suffisante), convient parfaitement. On peut par exemple, pour une tension donnée, augmenter l'intensité du courant jusqu'à l'initiation de la combustion.

Dans certains cas, pour favoriser l'allumage, on peut disposer une poudre d'allumage relais classique bien connue de l'homme du métier, entre le filament et le matériau compact. Dans ce cas, de façon préférée, on utilisera une poudre d'allumage relais de même nature que le matériau compact selon l'invention, c'est-à-dire ayant les mêmes constituants, mais dont le rapport pourcentage massique en borohydrure de magnésium ou en l'un de ses dérivés/ pourcentage massique en oxydant est nettement inférieur, par exemple compris entre 0,1 et 1. Une telle composition relais d'allumage comportera donc par exemple un borohydrure de magnésium Mg(BH₄)₂ et un oxydant comme l'ammonium dinitramide ou le potassium dinitramide, présent dans la composition à un taux compris entre 50 et 70% du poids total de la composition.

La présente invention a également pour objet un générateur pyrotechnique d'hydrogène destiné à alimenter en hydrogène une pile à combustible à membrane échangeuse de protons, comprenant une composition solide précitée selon l'invention.

Les piles à combustible fonctionnant à l'hydrogène, encore appelées piles à combustible à membrane échangeuse de protons, sont bien connues de l'homme du métier.

Une telle pile à combustible est essentiellement constituée de 2 parties :
- le coeur de la pile, constitué d'une ou plusieurs cellules électrochimiques montées en série, qui produit l'énergie électrique.
- le réservoir à combustible, à savoir l'hydrogène.

A ces deux parties principales, viennent se greffer des systèmes auxiliaires concernant notamment l'approvisionnement en hydrogène du coeur de la pile, l'évacuation de l'eau produite, ou bien encore le refroidissement.

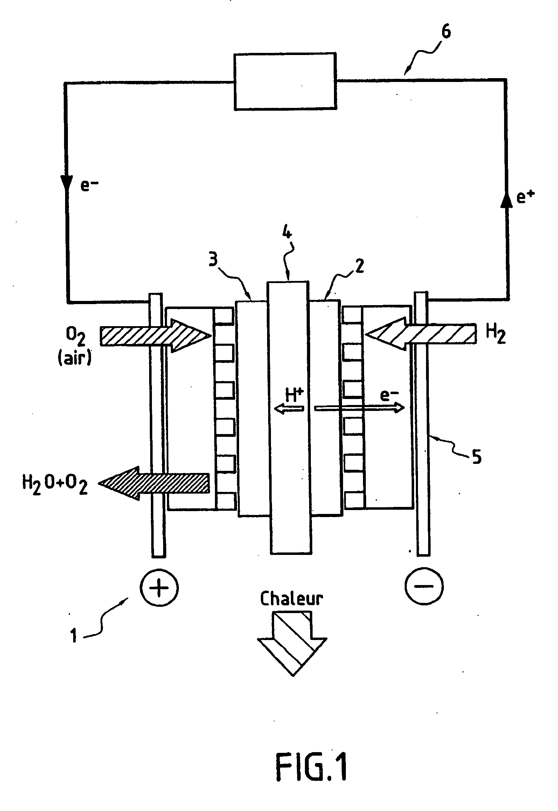

En figure 1 est représentée de manière schématique une cellule électrochimique du coeur de la pile.

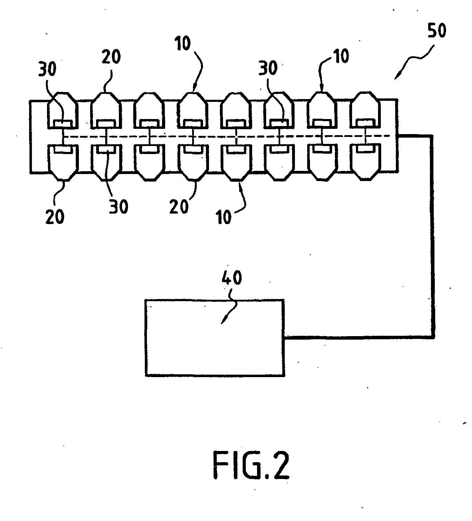

En figure 2 est représenté un générateur d'hydrogène pouvant être utilisé pour alimenter la pile représentée en figure 1.

On observe sur la figure 1 qu'une cellule 1 électrochimique du coeur de la pile fournit de l'énergie électrique à partir de deux réactions électrochimiques réalisées sur deux électrodes 2 et 3 en général constituées de carbone et séparées par une membrane 4 échangeuse de protons jouant le rôle d'électrolyte et en général constituée de polymères fluorés imprégnés d'eau. Sur l'anode 2, en présence d'un catalyseur en général à base de platine, l'hydrogène H₂ est oxydé se séparant en protons H⁺ et électrons e⁻. Le flux de protons H⁺ traverse la membrane 4 alors que les électrons e⁻ ne pouvant pas passer la membrane 4 sont captés par un collecteur de courant 5 relié à un circuit électrique 6 externe pour rejoindre la cathode 3. De l'autre côté de la membrane 4, au niveau de la cathode 3, les protons H⁺ et les électrons e⁻ se recombinent avec de l'oxygène O₂ provenant en général de l'air ambiant, pour produire de l'eau H₂O.

Un générateur 50 pyrotechnique d'hydrogène selon l'invention est représenté en figure 2. Il est essentiellement constitué d'une ou plusieurs chambres 10 dans lesquelles on place une composition 20 solide selon l'invention, de moyens 30 séparés d'initiation de la combustion de la composition dans chacune des chambres, de moyens 40 de commande de cette initiation, et de moyens (non représentés) de transfert de l'hydrogène libéré dans les chambres vers l'anode d'une cellule du coeur de la pile.

De façon préférée, la quantité globale d'hydrogène susceptible d'être fournie par le générateur 50 est libérée de façon discontinue par une initiation, distincte des compositions 20 solides contenues dans les diverses chambres 10. La masse de composition 20 solide dans chaque chambre 10 peut être identique ou différente d'une chambre à l'autre. Cette dernière variante permet une libération d'hydrogène en quantité adaptée à un besoin ponctuel.

Les diverses chambres 10 peuvent déboucher sur une chambre d'expansion de l'hydrogène libéré reliée au compartiment anodique d'une cellule 1 (figure 1), ou dont l'une des parois est au moins partiellement formée par l'anode.

La présente invention a également pour objet une pile à combustible à membrane échangeuse de protons utilisant l'hydrogène comme combustible, comprenant au moins une cellule électrochimique et un générateur pyrotechnique d'hydrogène précité selon l'invention relié au compartiment anodique de la cellule.

Les exemples non limitatifs suivants illustrent l'invention et les avantages qu'elle procure.

### Exemple 1 Composition solide constituée d'un mélange de Mg(BH₄)₂ et d'ammonium dinitramide dans les proportions pondérales relatives 60/40 respectivement.

On homogénéise un mélange de 90g de Mg(BH₄)₂ et 60g d'ammonium dinitramide (ci-après ADN) NH₄N(NO₂)₂ après broyage de chacun des deux constituants.

Une fraction du mélange pulvérulent et homogène ainsi obtenu est ensuite introduite puis compactée dans la matrice de compression d'une pastilleuse ayant la géométrie de pastille recherchée, sous une pression de 10⁷Pa (100 bar).

On introduit ensuite la pastille circulaire ainsi obtenue de diamètre 5mm et de masse 30mg dans une chambre à combustion de volume 40cm³, munie d'un manomètre, d'une sonde de température et d'un dispositif d'allumage usuel comprenant un filament nickel (80% en poids) - chrome (20% en poids). La pastille est mise au contact du filament puis on purge la chambre avec un gaz inerte (hélium) sous pression absolue de 10⁵Pa (1 bar).

On chauffe ensuite le filament par effet Joule jusqu'à l'initiation de la composition

Une fois initiée, la combustion de la composition est auto-entretenue et dure environ 3 s.

La combustion terminée, on laisse refroidir la chambre à la température ambiante puis on note la pression dans la chambre.

L'augmentation de pression mesurée et l'analyse des gaz présents après combustion par chromatographie couplée à un spectromètre de masse permet de calculer un rendement massique en hydrogène de 7,9%, exprimé en gramme d'hydrogène libéré par gramme de composition solide.

Dans les exemples 2 à 8, on procède exactement de la même manière en modifiant seulement les proportions pondérales relatives entre les deux constituants.

Le tableau 1 ci-dessous montre, pour chacun des exemples 1 à 8, les rendements théoriques en hydrogène pour différentes compositions.

**Tableau 1**

| | Rapport massique Mg(BH₄)₂/ADN | Température de combustion (K) | Rendement en hydrogène (%) |
|---|---|---|---|
| Exemple 1 | 10/90 | 2851 | 0,57 |
| Exemple 2 | 20/80 | 2736 | 2,78 |
| Exemple 3 | 30/70 | 2450 | 5,73 |
| Exemple 4 | 40/60 | 2145 | 7,32 |
| Exemple 5 | 50/50 | 2137 | 8,52 |
| Exemple 6 | 60/40 | 1997 | 9,76 |
| Exemple 7 | 70/30 | 1875 | 11,3 |
| Exemple 8 | 80/20 | 1097 | 12,6 |

Le rendement théorique en hydrogène diminue bien entendu lorsque la proportion de réducteur porteur d'hydrogène diminue.

### Exemples 9 à 12 Compositions solides constituées d'un mélange de Mg(BH₄)_{2/}KN(NO₂)₂ dans différentes proportions pondérales relatives.

Dans cet exemple, on utilise comme oxydant le potassium dinitramide KN(NO₂)₂ (désigné ci-après KDN). On opère exactement de la même manière que dans l'exemple 1 décrit ci-dessus, c'est-à-dire avec l'obtention d'une pastille de même masse. Comme dans les exemples 1 à 8 ci-dessus, on fait varier les proportions pondérales relatives entre les deux constituants.

Les résultats théoriques calculés pour les différentes compositions sont visibles dans le tableau 2 ci-dessous :

**Tableau 2**

| | Rapport massique Mg(BH₄)₂/KDN | Température de combustion (K) | Rendement en hydrogène (%) |
|---|---|---|---|
| Exemple 9 | 50/50 | 2005 | 7,13 |
| Exemple 10 | 60/40 | 1893 | 8,86 |
| Exemple 11 | 70/30 | 1411 | 10,45 |
| Exemple 12 | 80/20 | 843 | 11,95 |

Des analyses de stabilité ATD ou DSC ont été effectuées sur une composition de borohydrure de magnésium Mg(BH₄)₂ et d'ammonium dinitramide à 60/40 respectivement.

Ces analyses aboutissent généralement à des résultats équivalents. Une analyse en DSC (Differential Scanning Calorimeter) détecte une différence de chaleur tandis qu'une analyse en ATD permet de détecter une différence de température.

Dans nos conditions expérimentales en ATD ou DTA (pour Differential Thermal Analysis), le test consiste à chauffer la composition de 15 à 200°C en augmentant la température de 8°C par minute. Lors de cette élévation de température, ce test consiste à relever les températures des pics endothermiques ou exothermiques et à mesurer l'énergie libérée ou absorbée. Si aucune énergie n'est libérée ou absorbée, cela signifie que la composition est stable et donc que les constituants de la composition analysée cohabitent bien.

Les tests réalisés sur la composition précitée montrent que celle-ci est stable dans la gamme des températures ambiantes.

Des tests de sensibilité ont également été menés sur certaines compositions. Trois différents tests ont été pratiqués. Un premier test dénommé ISI (Indice de Sensibilité à l'Impact - AFNOR Série NF T70 500) permet de mesurer à l'aide d'un mouton la sensibilité à l'impact de la composition. Le test ISF (Indice de Sensibilité au Frottement - AFNOR Série NF T70 503) permet de mesurer la sensibilité à la friction de la composition. Un dernier test dénommé ES (Electricité Statique - GEMO Série SEN 503-00) permet d'évaluer la sensibilité de la composition à l'étincelle électrique.

Les résultats obtenus à chacun de ces tests pour différentes compositions sont reportés dans le tableau ci-dessous :

| | ISI | ISF | ES |
|---|---|---|---|
| Mg(BH₄)₂/ADN 70/30 | 1+/1 à 3,16 J | 1+/1 à 54,9N | <58mJ |
| | 0+/3 à 0,5 J | 3+/3 à 31,4N | |
| Mg(BH₄)₂/ADN (à 4% de SiO₂) 70/30 | 1+/1 à 3,16 J | 1+/1 à 54,9N | -à 104mJ |
| | | 3+/3 à 31,4N | |
| Mg(BH₄)₂/ADN (à 4% de SiO₂) 60/40 | 2,5 J | 1+/1 à 54,9N | 4-/4 à 109mJ |
| | | 3+/3 à 31,4N | |

En interprétant ce tableau, on remarque que la composition testée présente une sensibilité acceptable à l'impact. En revanche, la composition, grâce notamment à l'introduction de SiO₂ à hauteur de 4% dans l'ammonium dinitramide (ADN), n'est pas sensible à l'électricité statique. Enfin, la composition testée est sensible aux frottements. Cette sensibilité au frottement a été mesurée sur une composition présentée sous forme pulvérulente.

Enfin, un essai de tir en bombe manométrique réalisé sur 500mg de pastille ayant une composition Mg(BH₄)₂/ADN à 70/30 dans une bombe ayant un volume de 38,4 cm3 a permis de mettre en évidence la quasi absence de gaz poisons comme le monoxyde de carbone CO. Le taux de monoxyde de carbone CO dans les gaz recueillis est inférieur à 5ppm. Le taux d'ammoniaque NH₃ dans les gaz recueillis est inférieur à 10ppm.

## Revendications

1. Composition solide décomposable en générant de l'hydrogène selon une réaction auto-entretenue de combustion après initiation de cette réaction par une source de chaleur appropriée, **caractérisée en ce que** ladite composition, ne contenant pas de carbone, comprend le borohydrure de magnésium (Mg(BH₄)₂) ou l'un de ses dérivés et un composé oxydant de la famille des dinitramides ; la somme des pourcentages massiques en borohydrure de magnésium où en un de ses dérivés et en composé oxydant de la famille des dinitramides étant supérieure ou égale à 75 % par rapport à la masse totale de la composition.

2. Composition solide selon la revendication 1, **caractérisé en ce que** le composé de la famille des dinitramides est choisi parmi l'ammonium dinitramide NH₄N(NO₂)₂ et le potassium dinitramide KN(NO₂)₂.

3. Composition solide selon la revendication 1 ou 2, **caractérisée en ce que**, pour supprimer la sensibilité de la composition à l'électricité statique, une quantité déterminée de silice SiO₂ est introduite dans le composé de la famille des dinitramides.

4. Composition selon la revendication 3, **caractérisée en ce que** le SiO₂ est présent à hauteur de 4 % dans le composé de la famille des dinitramides.

5. Composition solide selon l'une quelconque des revendications 1 à 4, **caractérisée en ce que** la somme des pourcentages massiques en borohydrure de magnésium ou en un de ses dérivés et en composé oxydant de la famille des dinitramides est supérieure ou égale à 90 % par rapport à la masse totale de la composition.

6. Composition solide selon l'une quelconque des revendications 1 à 5, **caractérisée en ce que** la somme des pourcentages massiques en borohydrure de magnésium ou en un de ses dérivés et en composé oxydant de la famille des dinitramides est supérieure ou égale à 95 % par rapport à la masse totale de la composition.

7. Composition solide selon l'une quelconque des revendications 1 à 6, **caractérisée en ce que** le rapport pourcentage massique en borohydrure de magnésium ou en un de ses dérivés/pourcentage massique en composé oxydant de la famille des dinitramides est compris entre 1 et 10, préférentiellement entre 1 et 4.

8. Composition solide selon l'une quelconque des revendications 1 à 7, **caractérisée en ce qu'**elle se présente sous forme d'un matériau compact.

9. Composition solide selon la revendication 8, **caractérisée en ce que** le matériau compact est une pastille ou un grain.

10. Procédé de génération d'hydrogène par combustion auto-entretenue d'une composition solide **caractérisé en ce que** :
- on réalise une composition solide homogène, pulvérulente ou granulaire, ne contenant pas de carbone, comprenant le borohydrure de magnésium ou l'un de ses dérivés et un composé oxydant de la famille des dinitramides ; la somme des pourcentages massiques en borohydrure de magnésium ou en un de ses dérivés et en composé oxydant de la famille des dinitramides étant supérieure ou égale à 75 % par rapport à la masse totale de la composition,
- on agglomère ensuite cette composition selon des moyens appropriés de façon à former un matériau compact,
- on place le matériau compact dans une chambre à combustion,
- on initie la combustion du matériau compact à l'aide d'une source de chaleur appropriée, ce qui provoque la combustion auto-entretenue du matériau avec génération d'hydrogène jusqu'à la fin de la combustion.

11. Générateur (50) d'hydrogène destiné à alimenter en hydrogène une pile à combustible à membrane échangeuse de protons, **caractérisé en ce que** ce générateur (50) est un générateur pyrotechnique comprenant une composition solide selon l'une quelconque des revendications 1 à 9.

12. Pile à combustible à membrane échangeuse de protons utilisant l'hydrogène comme combustible, comprenant au moins une cellule (1) électrochimique et un générateur (50) d'hydrogène relié au compartiment anodique de la cellule (1), **caractérisée en ce que** ce générateur (50) d'hydrogène est un générateur pyrotechnique selon la revendication 11.

## Patentansprüche

1. Feste Zusammensetzung, die unter Erzeugung von Wasserstoff entsprechend einer sich selbst unterhaltenden Verbrennungsreaktion nach Einleiten dieser Reaktion durch eine geeignete Wärmequelle zersetzbar ist, **dadurch gekennzeichnet, dass** die Zusammensetzung, die keinen Kohlenstoff enthält, Magnesiumborhydrid (Mg(BH₄)₂) oder eines seiner Derivate sowie eine oxidierende Verbindung aus der Familie der Dinitramide umfasst, wobei die Summe der Massenanteile in Prozent an Magnesiumborhydrid oder an einem seiner Derivate und an oxidierender Verbindung aus der Familie der Dinitramide größer als oder gleich 75 % bezogen auf die Gesamtmasse der Zusammensetzung ist.

2. Feste Zusammensetzung nach Anspruch 1, **dadurch gekennzeichnet, dass** die Verbindung aus der Familie der Dinitramide aus Ammoniumdinitramid NH₄N(NO₂)₂ und Kaliumdinitramid KN(NO₂)₂ ausgewählt ist.

3. Feste Zusammensetzung nach Anspruch 1 oder 2, **dadurch gekennzeichnet, dass** zur Beseitigung der Empfindlichkeit der Zusammensetzung gegenüber statischer Elektrizität eine bestimmte Menge an Siliziumdioxid SiO₂ in die Verbindung aus der Familie der Dinitramide eingebracht wird.

4. Zusammensetzung nach Anspruch 3, **dadurch gekennzeichnet, dass** das SiO₂ in der Verbindung aus der Familie der Dinitramide in einer Höhe von 4 % vorhanden ist.

5. Feste Zusammensetzung nach einem der Ansprüche 1 bis 4, **dadurch gekennzeichnet, dass** die Summe der Massenanteile in Prozent an Magnesiumborhydrid oder an einem seiner Derivate und an oxidierender Verbindung aus der Familie der Dinitramide größer als oder gleich 90 % bezogen auf die Gesamtmasse der Zusammensetzung ist.

6. Feste Zusammensetzung nach einem der Ansprüche 1 bis 5, **dadurch gekennzeichnet, dass** die Summe der Massenanteile in Prozent an Magnesiumborhydrid oder an einem seiner Derivate und an oxidierender Verbindung aus der Familie der Dinitramide größer als oder gleich 95 % bezogen auf die Gesamtmasse der Zusammensetzung ist.

7. Feste Zusammensetzung nach einem der Ansprüche 1 bis 6, **dadurch gekennzeichnet, dass** das Verhältnis Massenanteil in Prozent an Magnesiumborhydrid oder an einem seiner Derivate zu Massenanteil in Prozent an oxidierender Verbindung aus der Familie der Dinitramide zwischen 1 und 10, vorzugsweise zwischen 1 und 4 beträgt.

8. Feste Zusammensetzung nach einem der Ansprüche 1 bis 7, **dadurch gekennzeichnet, dass** sie in Form eines kompakten Materials vorliegt.

9. Feste Zusammensetzung nach Anspruch 8, **dadurch gekennzeichnet, dass** das kompakte Material eine Tablette oder ein Korn ist.

10. Verfahren zur Erzeugung von Wasserstoff durch sich selbst unterhaltende Verbrennung einer festen Zusammensetzung, **dadurch gekennzeichnet, dass**:
- eine homogene, pulverförmige oder körnige, keinen Kohlenstoff enthaltende feste Zusammensetzung, die Magnesiumborhydrid oder eines seiner Derivate sowie eine oxidierende Verbindung aus der Familie der Dinitramide umfasst, hergestellt wird, wobei die Summe der Massenanteile in Prozent an Magnesiumborhydrid oder an einem seiner Derivate und an oxidierender Verbindung aus der Familie der Dinitramide größer als oder gleich 75 % bezogen auf die Gesamtmasse der Zusammensetzung ist,
- anschließend diese Zusammensetzung mit geeigneten Mitteln zusammengeballt wird, um ein kompaktes Material zu bilden,
- das kompakte Material in einer Verbrennungskammer platziert wird,
- die Verbrennung des kompakten Materials mit Hilfe einer geeigneten Wärmequelle eingeleitet wird, was die sich selbst unterhaltende Verbrennung des Materials mit Erzeugung von Wasserstoff bis zum Ende der Verbrennung bewirkt.

11. Wasserstoffgenerator (50), der dazu bestimmt ist, eine Protonenaustauschmembran-Brennstoffzelle mit Wasserstoff zu versorgen, **dadurch gekennzeichnet, dass** dieser Generator (50) ein pyrotechnischer Generator, der eine feste Zusammensetzung nach einem der Ansprüche 1 bis 9 umfasst, ist.

12. Protonenaustauschmembran-Brennstoffzelle, die Wasserstoff als Brennstoff verwendet, umfassend wenigstens eine elektrochemische Zelle (1) und einen Wasserstoffgenerator (50), der mit dem Anodenabteil der Zelle (1) verbunden ist, **dadurch gekennzeichnet, dass** dieser Wasserstoffgenerator (50) ein pyrotechnischer Generator nach Anspruch 11 ist.

## Claims

1. A solid composition able to decompose in generating hydrogen according to a self-sustaining combustion reaction after initiation of this reaction by an appropriate heat source, **characterized in that** the said composition, which does not contain carbon, comprises magnesium borohydride (Mg(BH₄)₂) or one of its derivatives and an oxidizing compound of the family of the dinitramides; the sum of the percentages by weight of magnesium borohydride or of one of its derivatives and of oxidizing compound from the family of the dinitramides being greater than or equal to 75% with respect to the total weight of the composition.

2. The solid composition according to claim 1, **characterized in that** the compound of the family of the dinitramides is chosen from ammonium dinitramide NH₄N(NO₂)₂ and potassium dinitramide KN(NO₂)₂.

3. The solid composition according to claim 1 or 2, **characterized in that**, to remove the sensitivity of the composition to static electricity, a set amount of silica SiO₂ is introduced into the compound of the family of the dinitramides.

4. The composition according to claim 3, **characterized in that** the SiO₂ is present at a level of 4% in the compound of the family of the dinitramides.

5. The solid composition according to any one of claims 1 to 4, **characterized in that** the sum of the percentages by weight of magnesium borohydride or of one of its derivatives and of oxidizing compound of the family of the dinitramides is greater than or equal to 90% with respect to the total weight of the composition.

6. The solid composition according to any one of claims 1 to 5, **characterized in that** the sum of the percentages by weight of magnesium borohydride or of one of its derivatives and of oxidizing compound of the family of the dinitramides is greater than or equal to 95% with respect to the total weight of the composition.

7. The solid composition according to any one of claims 1 to 6, **characterized in that** the ratio of percentage by weight of magnesium borohydride or one of its derivatives to percentage by weight of oxidizing compound of the family of the dinitramides is between 1 and 10, preferably between 1 and 4.

8. The solid composition according to any one of claims 1 to 7, **characterized in that** it is provided in the form of a compact material.

9. The solid composition according to claim 8, **characterized in that** the compact material is a pellet or a grain.

10. A process for the generation of hydrogen by self-sustaining combustion of a solid composition **characterized in that**:
- a pulverulent or granular homogeneous solid composition containing no carbon and comprising magnesium borohydride or one of its derivatives and an oxidizing compound of the family of the dinitramides is prepared; the sum of the percentages by weight of magnesium borohydride or of one of its derivatives and of oxidizing compound of the family of the dinitramides being greater than or equal to 75% with respect to the total weight of the composition,
- this composition is subsequently agglomerated using appropriate means, so as to form a compact material,
- the compact material is placed in a combustion chamber,
- the combustion of the compact material is initiated using an appropriate heat source, which brings about the self-sustaining combustion of the material with generation of hydrogen up to the end of the combustion.

11. A hydrogen generator (50) intended to supply hydrogen to a proton exchange membrane fuel cell, **characterized in that** this generator (50) is a pyrotechnic generator comprising a solid composition according to any one of claims 1 to 9.

12. A proton exchange membrane fuel cell using hydrogen as fuel, comprising at least one electrochemical cell (1) and one hydrogen generator (50) connected to the anode compartment of the cell (1), **characterized in that** this hydrogen generator (50) is a pyrotechnic generator according to claim 11.
